# EUROPEAN PATENT SPECIFICATION

(11) **EP 1 312 050 B1**
(45) Date of publication and mention of the grant of the patent: **14.11.2007**
(21) Application number: 01934048.8
(22) Date of filing: 14.05.2001
(51) Int. Cl.: G07C 1/30, G07B 15/02, G07F 7/00

(54) **PARKING FEE SYSTEM**
PARKGEBÜHRSYSTEM
SYSTEME DE TARIFS DE STATIONNEMENT

(30) Priority: 15.05.2000 FI 20001159
(43) Date of publication of application: 21.05.2003
(73) Proprietor: Payway Oy, 00510 Helsinki (FI)
(72) Inventor: HARJU, Heikki, FIN-48100 Kotka (FI)
(74) Representative: Holmström, Stefan Mikael
(86) International application number: PCT/FI2001/000464
(87) International publication number: WO 2001/088856

(56) References cited:
- EP-A2- 0 952 557
- EP-A2- 0 971 320
- WO-A1-00/25271
- WO-A1-93/20539
- WO-A1-97/19568
- WO-A1-97/45814
- WO-A1-99/10844
- DE-A1- 19 749 578

## Description

The present invention relates to a parking fee system, wherein a user of the system sends parking data required for charging the parking to the parking fee system using a terminal, such as a mobile station. The user can be charged for the parking based on the parking data for example in a telephone bill of the terminal used for sending the parking data or via a credit card.

In known parking fee systems, a user of the system indicates the area code of the parking area in which he has parked his vehicle. The parking area code can be indicated for example by the driver calling a predetermined service number and using a terminal keyboard to key in the area code of the parking area used. To enable this, the area code is marked on a traffic sign or the like arranged near the parking area (see for example WO-A-9 910 844).

The drawback of the above known solution is that if a user for some reason gives the wrong area code to the parking fee system, the parking fee system may charge the user using the wrong tariff. This is because in the above known system, the parking fee tariff is dependent on the parking area used. Accordingly, the user does not pay a parking fee according to the right tariff, and the check data on the vehicle at his disposal are thus not correct. Check data refer to the data that are transferred to a parking attendant when the parking of the vehicle is checked. In the worst case, this may cause the user to receive a parking ticket since he has paid the parking fee using the wrong tariff.

The object of the present invention is to solve the above problem and to provide a solution for improving the user-friendliness of the parking fee system by decreasing the probability of the user giving the wrong area code when parking. This object is achieved by a method according to the attached claim 1 of processing parking data and a parking fee system according to claim 4.

Th*e* invention is based on the idea of find outing the location of the terminal that sent parking data when the parking data are being sent and then utilizing the location data to decrease the probability of the wrong tariff being used for charging for the parking or the check data on the vehicle being faulty. Several alternative ways to find out the location of a terminal are known previously from other contexts. In these known solutions, the verification of the location of a terminal may be based on, for example, the terminal comprising a positioning device, which the terminal can use to indicate its location. Alternatively, the location of a terminal can be found out for example by the base stations of a mobile system measuring the distance and direction to the terminal based on radio signals received from it. Still another solution is to find out the location of a terminal at the accuracy of a radio cell or a location area, whereby the location data indicates the base station or the location area of the mobile station via whose base station the terminal sent the parking data. An LCS function (Location Service) is being introduced to third generation mobile systems, whereby the mobile system provides coordinates expressing the middle point of the area where the terminal is likely to be located. The present invention can also utilize this positioning alternative or any other positioning method allowing the location of a terminal to be found out.

In accordance with the invention, a terminal can be located before the parking data are sent (if the mobile system continuously keeps a record of the location of the terminal, for example), or, alternatively, upon set-up of the connection or after the terminal has sent the parking data.

In a first preferred embodiment of the invention, the user indicates the area code upon transfer of other parking data. In addition, the location of the terminal used by the user is found out and the area code corresponding to the location is retrieved from a memory means based on the location. This allows the area code indicated by the user to be compared with the area code retrieved based on the location. Should these differ, the user is notified that the area code he gave is faulty, whereupon the user can be given the chance to input a new code. Alternatively, if the area code indicated by the user corresponds to the area code retrieved based on the location, the user is charged for the parking using a tariff corresponding to the indicated area code.

In a second preferred embodiment of the invention, the location of the terminal used to send the parking data is found out. The user is then charged for the parking using a tariff corresponding to an area code retrieved from a memory means based on the location data. In this embodiment of the invention, the user does not have to indicate an area code, but the parking fee system is able to find out the area code by means of the location of the user terminal.

In a third preferred embodiment of the invention, an area code is generated from a second part of an area code indicated by the user and a first part of an area code determined based on the location of the user. This ensures that at least the first part of the area code is correct, in addition to which the user does not have to for example key in the whole area code, only part thereof. It is irrelevant to the invention whether the first part of the area code precedes or succeeds the second part. Consequently, an area code can be in the form first part - second part or second part - first part.

The preferred embodiments of the method and parking fee system of the invention are disclosed in the attached dependent claims 2 to 5 and 8 to 12.

In the following, the invention will be described in detail by way of example with reference to the attached figures, of which
Figure 1 is a flow diagram of a first preferred embodiment of the method of the invention,
Figure 2 is a flow diagram of a second preferred embodiment of the method of the invention,
Figure 3 is a flow diagram of a third preferred embodiment of the method of the invention,
Figure 4 is a flow diagram of a fourth preferred embodiment of the method of the invention,
Figure 5 is a block diagram of a first preferred embodiment of the parking fee system of the invention,
Figure 6 is a block diagram of a second preferred embodiment of the parking fee system of the invention,
Figure 7 is a block diagram of a third preferred embodiment of the parking fee system of the invention,
Figure 8 is a block diagram of a fourth preferred embodiment of the parking fee system of the invention, and
Figure 9 is a block diagram of a fifth preferred embodiment of the parking fee system of the invention.

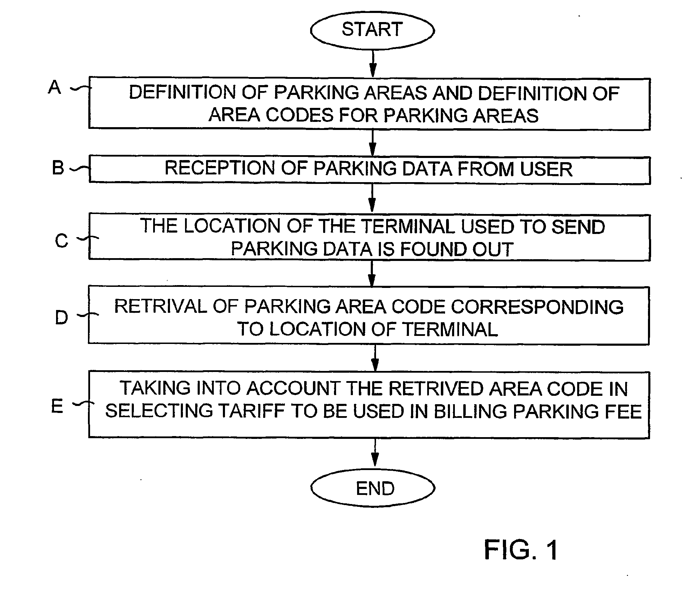

Figure 1 is a flow diagram of a first preferred embodiment of the method of the invention.

In block A, parking areas are defined for the area covered by the system, and area codes are defined for the parking areas. For example, a given neighbourhood, some blocks or parking spaces located along a given street can be defined as a single parking area. Traffic signs, for example, are arranged in the parking area, indicating the code of the parking area.

In block B, parking data are received from a user of the system. In accordance with the invention, the user of the system reports the parking data via a terminal, such as a mobile station. The user may transfer the parking data by calling a predetermined service number, whereby the call is connected to an interactive voice-response centre, via which the data can be input. Alternatively, the parking data may be sent in a short message to a predetermined service number or they can be input in a WAP form (Wireless Application Protocol) to be transferred to a WAP server or from there further to the Internet. The parking data include information required for charging the parking fee, such as:
information indicating the vehicle for which parking fee is to be paid. If the sender of the parking data is registered in advance as a user of the parking fee system, information on a given vehicle may have been stored in the system together with the number of the user terminal. This allows the parking fee system to find out the registration number of the vehicle, for example, based on the subscriber A identifier, i.e. the number of the user terminal, transferred by the mobile system,
information indicating the duration of time the user wants to pay parking fee for, e.g. 20 min. This information is not obligatory, since the parking fee server may be programmed to charge parking fee until it receives an end notification from the user by a new call, for example.

In block C, the location of the terminal used for sending the parking data is found out. The location of the terminal can be found out in several alternative ways. The terminal itself may comprise a GPS receiver, enabling it to notify its location to the mobile station. Alternatively, the mobile system can find out the location of the terminal for example at the accuracy of a cell or a location area. The inventive solution may utilize any known positioning method, which generates location data describing the location of the terminal.

The location of a terminal may be found out at a different point of time than shown in the block diagram of Figure 1. That is, the blocks of Figure 1 do not necessarily have to be performed in the order shown. For example, in some mobile systems, information about the location of a terminal may be transferred immediately upon connection set-up, whereby the system is in practice aware of the location before parking data are sent/received.

In block D, an area code corresponding to the location of the terminal is retrieved from a memory means based on the location data. The memory means may be composed of for example a database arranged in connection with a network element, i.e. server, of the parking fee system. In this case, when receiving parking data from the mobile system, the network element receives location data indicating the location of the terminal that sent the parking data. The network element can use this location data to retrieve the code of the parking area corresponding to the location from the memory means.

Alternatively, the memory means may be arranged in connection with a network element of a mobile system. In this case, the mobile system does not transfer location data to the parking fee system, but transfers directly an area code retrieved from the memory means based on the location data.

In block E, the area code retrieved from the memory means is taken into account in further processing of the parking data. This reduces the risk of charging for parking using the wrong tariff or the check data on the vehicle being faulty.

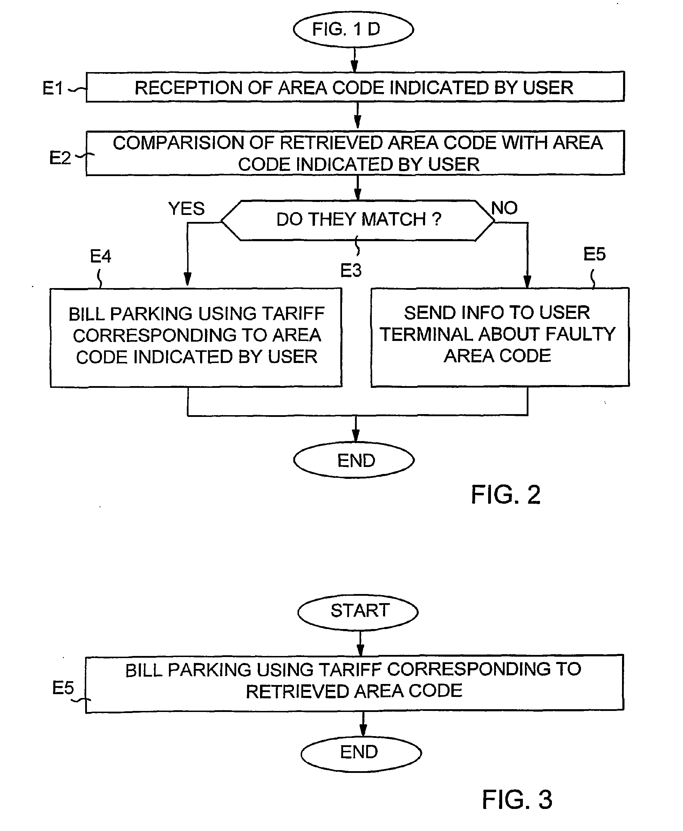

Figure 2 is a flow diagram of a second preferred embodiment of the method of the invention. In the embodiment of Figure 2, method steps A to D are performed as was described in connection with Figure 1.

In the embodiment of Figure 2, the process proceeds from block D, not to block E as Figure 1, but to block E1, wherein the parking area code indicated by the user is received. The user can indicate the parking area code by sending it with other parking data, for example by keying it in by means of the terminal keyboard. Alternatively, for example, a special telephone number may be in use for each parking area, whereby the number the user has called or to which he has sent a short message indicates the code of the parking area indicated by the user. Thus, the area notified by the user is apparent from the subscriber B identifier transferred from the mobile system.

In block E2, the area code retrieved from the memory means and the area code indicated by the user are compared. If it is noted in block E3 that they do not correspond to one another, the process goes to block E5, wherein information is sent to the user stating that the area code indicated by him is faulty. At the same time, the user can be requested to resend the parking data.

If, on the contrary, it is noted in block E3 that the area code retrieved corresponds to the area code indicated by the user, in block E4 the user is charged for parking using a tariff corresponding to the area code indicated by the user. In accordance with the invention, a special tariff may be defined for each area code or, alternatively, the area codes may be grouped such that a given area code group has a common tariff. Charging may take place for example in the phone bill, via a credit card or a separate invoice.

In order to take into account the inaccuracy of the positioning method used in the system of the invention, the comparison of block E2 in Figure 2 may be carried out in a way distinct from what was described above. If positioning is based on for example identifying the radio cell used by the terminal, whereby location data is generated from the identifier of the radio cell (or the base station), then the radio cell may cover several parking areas, whereby several alternative area codes exist. In this case, in accordance with the invention, the codes of all parking areas belonging to said cell are stored in conjunction with the radio cell's identifier (i.e. location data). That is, the memory means may comprise for example the following data: Cell1: Area1, Area2, Area3 and Area4. In other words, radio cell Cell1 covers four parking areas. In this case, the comparison is carried out by comparing the area code indicated by the user with the area codes (four of them) that are stored in the memory means in conjunction with Cell1. If the area code indicated by the user is one of the above area codes, then it is determined in block E3 that the area code indicated by the user corresponds to the area code retrieved from the memory means.

Figure 3 is a flow diagram of a third preferred embodiment of the inventive method. In the embodiment of Figure 3, method steps A to D are carried out as was described in connection with Figure 1.

In the embodiment of Figure 3, the process proceeds from block D, not to block E as in Figure 1, but to block E5, wherein the area code retrieved from the memory means is taken into account in selecting the tariff, so that the user is charged for parking using a tariff corresponding to the area code retrieved. Such an embodiment is suitable for use for example in systems employing a very exact positioning method. The system may be for example such that a special parking base station, which transfers data describing its location via a wireless connection to a user terminal is in use, or such wherein the coverage area of parking areas corresponds to the coverage of the radio cells (i.e. one radio cell always constitutes one parking area that has a special identifier). The embodiment of Figure 3 is advantageous in that the user does not have to inform the system of any area code upon transmission of parking data, but the system is able to automatically retrieve the area code based on the positioning. This avoids a situation wherein a faulty area code indicated by the user could cause damage.

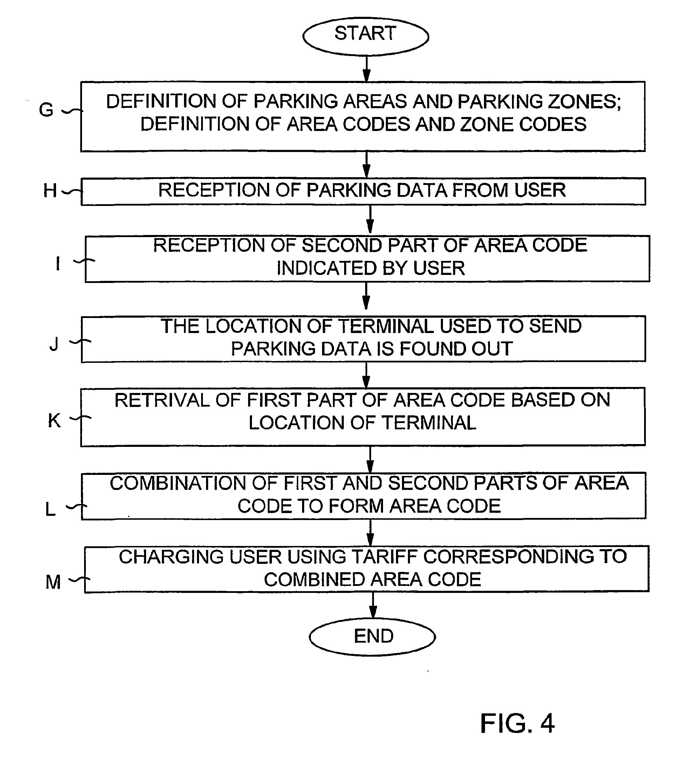

Figure 4 is a flow diagram of a fourth preferred embodiment of the method of the invention. The embodiment of Figure 4 differs from the previous embodiments in that the area code required for charging for parking is generated by combining data indicated by the user based on location data with data retrieved from the memory means.

In block G, parking areas and parking zones are defined for the area covered by the system. Area codes are also defined for parking areas and parking zones. In this case, a single parking zone may cover e.g. the parking areas of a given city or county. Alternatively, a parking zone may only cover e.g. the parking areas of a given neighbourhood. For example, a given neighbourhood, some blocks or e.g. the parking spaces located in a given street may be defined as a single parking area. In accordance with the invention, a zone code is defined for each parking zone. Said zone code of a parking zone constitutes the first part of the area code of all parking areas included in said parking zone. The second part of the area codes individualizes a parking area in a parking zone. Consequently, for example a parking zone having an area code AAA may comprise parking areas whose area codes are AAA001, AAA002, AA003, etc. (or 001AAA, 002AAA, 003AAA, etc., respectively).

In blocks H and I, parking data are received from a user. The user may transfer the same parking data to the parking fee system in the same way as was described in connection with Figure 1, for example. In the embodiment of Figure 4, the user also indicates the second part of the area code (e.g. 001, 002, 003, etc.). In the same way as was described for block E1 in Figure 2, the user may indicate the second part of the area code together with other parking data or, alternatively, by selecting such a telephone number for sending the parking data in which number the second part of the area code is included.

In block J, the location of the terminal that sent the parking data is found out. The location may be found out in the same way as was described for the previous embodiments.

In block K, the location data is used to retrieve the first part of the area code corresponding to the location of the terminal from the memory means. The first part of the area code is retrievable from a similar memory means in the same way as was described for the previous embodiments.

In the case of Figure 4, the first part of the area code corresponds to the zone code of the parking zone. In practice, in the embodiment of Figure 4, the memory means thus comprises at least zone codes and associated location data.

In block L, the second part (e.g. 002) of the area code indicated by the user is combined with the first part (e.g. AAA) of the area code retrieved from the memory means. The result is a complete area code (e.g. AAA002 or 002AAA).

In block M, the user is charged for parking using a tariff corresponding to the combined area code.

The embodiment of Figure 4 is user-friendly in that the user of the system does not have to input the entire area code in his terminal, only part thereof. Furthermore, the embodiment of Figure 4 ensures that at least the first part of the area code of the parking area, corresponding to the zone code, is always correct. Hence, the parking fee is always directed to the right parking zone, even though the user had indicated a faulty second part of the area code. For example, if parking zones are city-specific, this ensures that the parking fee is directed at least to the right city.

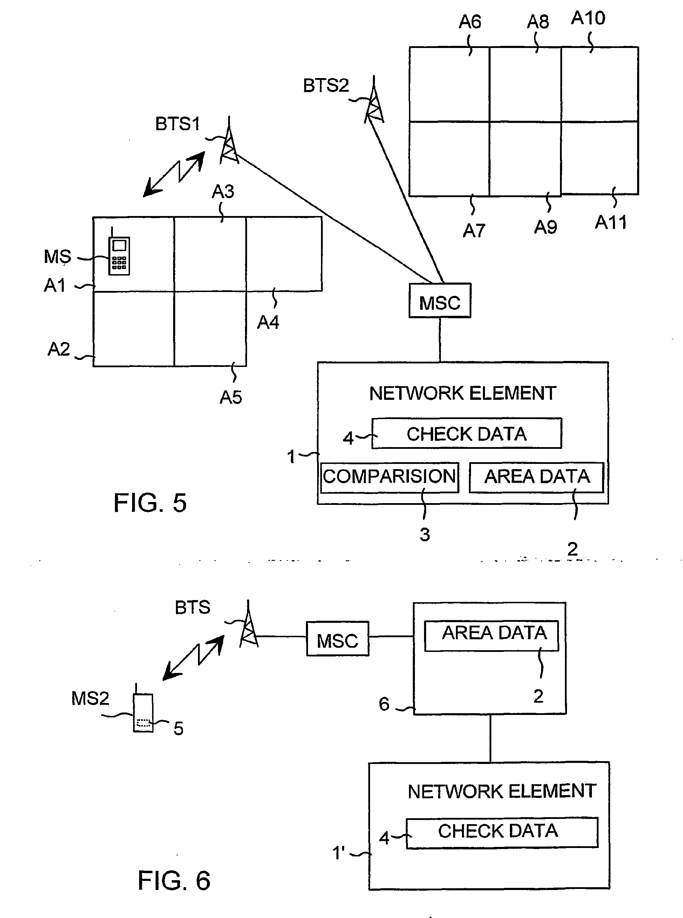

Figure 5 is a block diagram of a first preferred embodiment of the parking fee system of the invention. Figure 5 shows part of a mobile system, comprising base stations BTS1 and BTS2, and a mobile switching centre MSC. Figure 5 also shows a network element 1 of the parking fee system, i.e. a parking fee server, which communicates with the mobile system via a data transmission connection. Network element 1 may be a separate network element of the parking fee system as is shown in Figure 5 or, alternatively, its functions may be integrated into a network element of the mobile system.

In the system of Figure 5, the location of a driver's terminal MS is found out at the accuracy of the radio cell used. That is, when terminal MS sends parking data via base station BTS1 and mobile switching centre MSC to network element 1, the mobile system simultaneously transfers location data, which is composed of the identifier of the radio cell via which the parking data are sent, to the network element. Alternatively, the mobile system may convert the radio cell identifier into e.g. coordinates, whereby the network element directly receives the coordinates expressing the location of the terminal.

In Figure 5, parking areas A1 to A5 are located in the coverage area of a radio cell maintained by base station BTS1. Similarly, parking areas A6 to A11 are located in the coverage area of a radio cell maintained by base station BTS2. Accordingly, the memory of the memory means 2 in network element 1 of Figure 5 comprises an area data table, which may take for example the following form:
- Location data: Area code
- BTS1: A1, A2, A3, A4, A5
- BTS2: A6, A7, A8, A9, A10, A11
- etc.: etc.

When a user parks a vehicle in area A1, he uses a terminal to send parking data to network element 1 of the parking fee system. Besides parking data, the user also gives area code A1. The user is able to send the area code and the parking data e.g. by calling a given service number, whereby the call is connected to an interactive voice-response unit of the mobile system, by sending a short message or by setting up a connection to a WAP server for inputting the data. Besides the parking data, the network element receives also location data from the mobile station; in this case, BTS1, i.e. the identifier of the radio cell used. Next, the network element retrieves the area code corresponding to the location data BTS1 from memory means 2. In this exemplary case there are several, i.e. A1 to A5. These codes are transferred to a comparison unit 3, which may be composed for example of a computer program module in network element 1. In addition, comparison unit 3 receives area code A1 indicated by the user. Accordingly, after comparison, comparison unit 3 notes that the area code given by the user corresponds to the area code retrieved from memory means 2 based on the location data. Network element 1 then triggers off charging of the parking fee using a tariff corresponding to the area code given by the user. In the embodiment of Figure 5, the network element also stores check data required for checking the parking in memory means 4. In other words, a parking attendant is able to send an inquiry to network element 1 via a check device to check if parking fee is being paid at that particular moment for a given vehicle. The network element produces a response message to this inquiry by means of the check data stored in memory means 4.

If comparison unit 3 detects that the area code given by the user does not correspond to the area code retrieved based on the location data, network element 1 sends a notification to terminal MS via the mobile system indicating that the area code is faulty and that the parking data are to be resent.

Figure 6 is a block diagram of a second preferred embodiment of the parking fee system of the invention. The embodiment of Figure 6 differs from the embodiment of Figure 5 in that in the case of Figure 6, the location of terminal MS2 is found out by means of a GPS receiver in the terminal. The terminal sends coordinates describing its location, i.e. location data, either at regular intervals or in connection with the reception of the parking data to the mobile station.

The embodiment of Figure 6 also differs from the embodiment of Figure 5 in that in the case of Figure 6, the memory means from which the area code can be retrieved based on the location data is arranged separately from a network element 1' of the parking fee system in a network element 6 of the mobile system. In the case of Figure 6, parking area coordinates and area codes are stored in memory means 2, whereby the location data received from terminal MS2 can be used to find out the area code of the parking area wherein terminal MS2 is located. Thus, the network element of the parking fee system receives parking data and an area code retrieved based on the location data from the mobile system. In the case of Figure 6, the area code does not have to be checked nor does an area code have to be indicated together with the parking data, but network element 1' can directly charge the user using a parking tariff corresponding to the area code and store the check data in memory means 4.

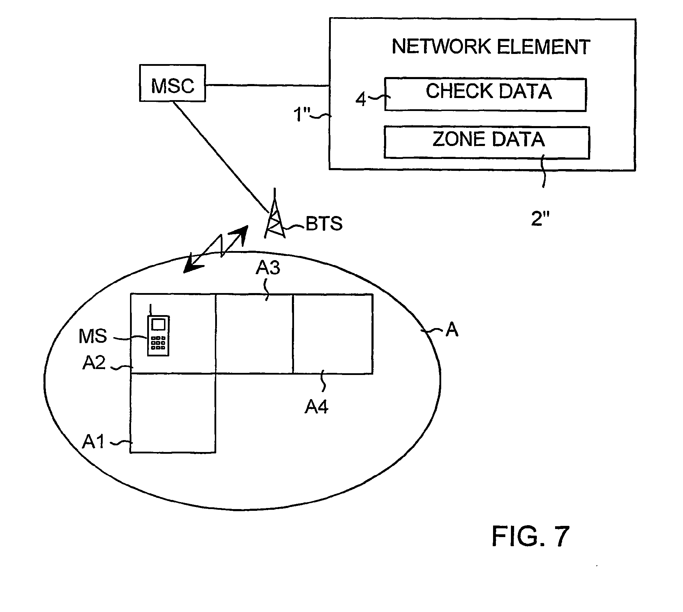

Figure 7 is a block diagram of a third preferred embodiment of the parking fee system of the invention. In the embodiment of Figure 7, the area covered by the system is divided into zones, each zone being divided into parking areas. Figure 7 shows parking areas A1 to A4 belonging to parking zone A. The area codes of the parking zones have two parts, an area code comprising a first part corresponding to the zone code (e.g. A) of the zone wherein the parking area is located, and a second part individualizing the parking area in a zone (e.g. 1 to 4). Accordingly, an area code may take the form A1 (zone, area) or 1 A (area, zone).

When a user parks in parking area A2, he detects a traffic sign indicating that he has parked in area 2. Upon sending parking data, the user then notifies network element 1" that the second part of the area code of the parking area is 2. Besides parking data, the network element receives the identifiers BTS of the radio cell used, which provides the location data describing the location of terminal MS, from the mobile station. Accordingly, network element 1" is able to retrieve the zone code corresponding to the location data BTS from memory means 2", the code being the same as the first part of the area code of the parking area used. The result of the retrieval from memory means 2" shows that the first part of the area code is A. Hence; the network element is able to produce a complete area code, which is A2. The network element now charges for parking using a tariff corresponding to said area code, in addition to which it stores the data required for checking the parking in memory means 4.

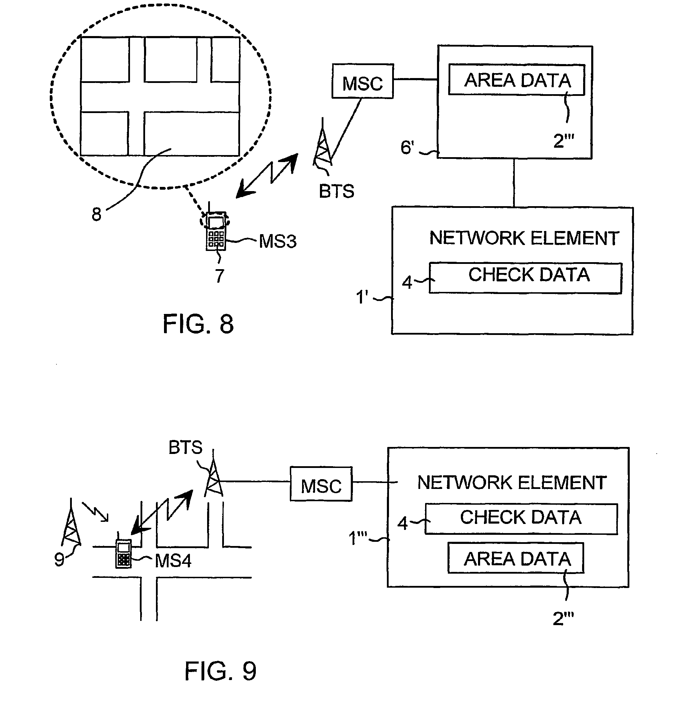

Figure 8 is a block diagram of a fourth preferred embodiment of the parking fee system of the invention. In the embodiment of Figure 8, data are stored in memory means 2''' for producing a map onto a display comprised by a user interface 7 in terminal MS3. The data required to produce the map may be stored in the memory means 2'" together with data describing the locations of the parking areas. Although the exemplary case of Figure 8 shows that memory means 2''' is located in network element 6' of the mobile system, it may alternatively, in accordance with the invention, be located in network element 1' of the parking fee system.

When the user of terminal MS3 sends parking data to the parking fee system, information on the location of the mobile station is transferred to network element 6'. Network element 6' uses these data to retrieve data based on the location from memory means 2'" and sends them to terminal MS3. Terminal MS3 uses these data to produce a map onto the display of its user interface 7 showing the area wherein the terminal is located. In Figure 8, reference 8 denotes the map shown on the display of the terminal.

When the user of the terminal sees the map 8, he may use user interface 7 to indicate the point where he is parking his vehicle. The terminal then transfers information on the location given by the user to the parking fee system. Network element 6' receives the location given by the user, whereupon it retrieves the code of the parking area corresponding to the location from memory means 2''' and sends it to network element 1' of the parking fee system. Network element 1' sees to it that the parking fee is charged using a tariff corresponding to the area code transferred to it.

As distinct from the above, in the embodiment of Figure 8, the data required to produce the map includes the outlines and area codes of the parking areas. In other words, a map showing also the outlines and area codes of parking areas appears on the display of the terminal. This allows the user to use for example the keyboard of the terminal to input the area code of the parking area where he is located according to the map. Network element 1' of the parking fee system then receives the area code indicated by the user, and also sees to it that the parking fee is charged using a tariff corresponding to the area code.

Figure 9 is a block diagram of a fifth preferred embodiment of the parking fee system of the invention. In the embodiment of Figure 9, the user of terminal MS4 is parking his vehicle in a parking area having a special parking base station 9 arranged therein. Parking base station 9 uses a wireless connection to send information about the location of terminal MS4 to it. The information about the location may be composed of e.g. coordinates or an individual identifier of the parking base station, whereby the area data stored in memory means 2"" of network element 1"' can be used to find out the code of the parking area wherein the parking base station and user terminal MS4 are located. The wireless connection that parking base station 9 uses to send data to terminal MS4 may be e.g. a Bluetooth connection. Network element 1"' sees to it that the parking fee is charged using a tariff corresponding to the area code retrieved from memory means 2"".

In the embodiments of Figure 5 to 9 above, the check data are maintained in a memory means of a network element. However, this is only one example of the implementation of the system of the invention. An alternative embodiment is for the vehicle to be parked to comprise a vehicle device that is able to receive the check data via a wireless connection. In this case, the check data can be stored in the vehicle device, from which they are transferred to the use of a parking attendant in connection with a check-up via the display of the vehicle device or a wireless connection, for example.

## Claims

1. A method of processing parking data in a parking fee system, in which method:
the geographical area covered by the system is divided into parking areas,
area codes are defined for the parking areas, and
parking data are received from a user of the parking fee system via a mobile system, said parking data including at least an area code indicated by the user, **characterized by**
finding out the location of a terminal used for transmitting the parking data,
retrieving one or several parking area codes based on the location of the terminal from a memory means,
comparing the retrieved area code with the area code indicated by the user, and
selecting for use a tariff corresponding to the area code indicated by the user to generate charging data if the area code indicated by the user corresponds to the retrieved area code, or sending information to the user terminal about a faulty area code indicated by the user if the area code indicated by the user does not correspond to the retrieved area code.

2. A method as claimed in claim 1, **characterized in that** in the method the user indicates the area code by calling a telephone number marked in connection with the parking area, the area code being included in the number, whereby the telephone number selected by the user indicates the area code.

3. A method as claimed in claim 1, **characterized in that** in the method the user indicates the area code by indicating his location by a map application displayed on a graphic user interface in the terminal, whereby the area code corresponding to the indicated location is transferred to the parking fee system.

4. A parking fee system, the geographical area covered by the system being divided into parking areas (A1 to A11), and area codes (A1 to A11) being defined for the parking areas, the system comprising a network element (1, 1', 1''') for receiving parking data sent by a user via a terminal (MS, MS2, MS3, MS4), said parking data including at least a parking area code, **characterized in that** the system further comprises:
positioning means for generating location data describing the location of the terminal (MS, MS2, MS3, MS4),
memory means (2, 2', 2"', 2"") in which data describing the location of the parking areas (A1 to A11) covered by the parking fee system and area codes of the parking areas are stored, and from which one or several parking area codes are retrievable based on the location data,
comparison means (3) arranged to compare the area code indicated by the user of the terminal (MS) when sending the parking data with the area code retrieved from the memory means (2) based on the location data, and
said parking fee system is responsive to the comparison means (3) for charging the user for parking using a tariff corresponding to the area code indicated by him if the comparison means (3) indicate that the area code indicated by the user corresponds to the area code retrieved based on the location data.

5. A parking fee system as claimed in claim 4, **characterized in that**
the data describing the location of the parking areas include data for generating a map (8) describing the geographical area covered by them,
the parking fee system comprises means (6') for retrieving from the memory means (2"') and sending to the terminal (MS3), based on the location data describing the location of the terminal, data, which the terminal uses to generate the map (8) via a user interface (7), which map covers at least the area in which the terminal (MS4) is located based on said location data describing the location, and
the terminal (MS3) comprises means for transferring the location indicated by the user via the user interface (7) on the map to the parking fee system, which, based on said location, retrieves the area code corresponding to the location from the memory means (2"') and charges the user for parking using a tariff corresponding to the area code retrieved from the memory means.

6. A parking fee system as claimed in claim 4, **characterized in that**
the information describing the location of the parking areas includes data for generating a map describing the geographical area covered by them,
the parking fee system comprises means (6') for retrieving from the memory means (2"') and sending to the terminal, based on the location data describing the location of the terminal (MS3), data, which the terminal (MS3) uses to generate the map via a user interface (7), which map covers at least the area in which the terminal (MS4) is located based on said location data describing the location, and which map indicates the area codes of the parking areas, and
the terminal (MS3) comprises means for receiving and sending the area code entered by the user via the user interface (7) to the parking fee system, which charges the user for parking using a tariff corresponding to the area code.

7. A parking fee system as claimed in claim 4, **characterized in that**
the positioning means comprise a parking base station (9) arranged near the parking area and arranged to send information describing its location to the terminal (MS4),
the terminal (MS4) is arranged to receive the information describing the location sent by the parking base station and send it together with the parking data to the parking fee system, which uses the information describing the location to retrieve the area code corresponding to the location from the memory means (2"").8. A network element, **characterized in that** said network element (1, 6, 1 ") comprises memory means (2, 2") in which information describing the location of parking areas (A1 to A11) covered by a parking fee system and area codes of the parking areas are stored, and from which one or several parking area codes are retrievable based on the location data.

## Patentansprüche

1. Verfahren zum Verarbeiten von Parkdaten in einem Parkgebührensystem, wobei in dem Verfahren:
die von dem System abgedeckte geographische Fläche in Parkflächen unterteilt wird,
Flächencodes für die Parkflächen definiert werden, und
Parkdaten von einem Benutzer des Parkgebührensystems über ein mobiles System empfangen werden, wobei die Parkdaten zumindest einen von dem Benutzer angegebenen Flächencode enthalten, **gekennzeichnet durch**
das Auffinden der Position eines zum Übertragen der Parkdaten verwendeten Terminals, und
das Abrufen eines oder mehrerer auf der Position des Terminals basierender Flächencodes aus einer Speichereinrichtung,
das Vergleichen des abgerufenen Flächencodes mit dem von dem Benutzer angegebenen Flächencode,
das Wählen eines Tarifs zur Nutzung, welcher dem von dem Benutzer angegebenen Flächencode entspricht, um Kostendaten zu erzeugen, wenn der von dem Benutzer angegebene Flächencode dem gefundenen Flächencode entspricht, oder um an das Benutzerterminal Informationen über einen falschen von dem Benutzer angegebenen Flächencode zu senden, wenn der von dem Benutzer angegebene Flächencode nicht dem gefundenen Flächencode entspricht.

2. Verfahren nach Anspruch 1, **dadurch gekennzeichnet, dass** bei dem Verfahren der Benutzer den Flächencode angibt, indem er eine in Verbindung mit der Parkfläche angegebene Telefonnummer anruft, wobei der Flächencode in der Nummer enthalten ist, wodurch die von dem Benutzer gewählte Telefonnummer den Flächencode angibt.

3. Verfahren nach Anspruch 1, **dadurch gekennzeichnet, dass** bei dem Verfahren der Benutzer den Flächencode angibt, indem er seine Position mittels einer auf einem graphischen Benutzerinterface in dem Terminal angezeigten Kartenanwendung angibt, wodurch der der angegebenen Position entsprechende Flächencode an das Parkgebührensystem übertragen wird.

4. Parkgebührensystem, bei dem die von dem System abgedeckte geographische Fläche in Parkflächen (A1 bis A11) unterteilt ist, und Flächencodes (A1 bis A11) für die Parkflächen definiert sind, wobei das System ein Netzwerkelement (1, 1', 1") zum Empfangen von Parkdaten aufweist, welche von einem Benutzer über ein Terminal (MS, MS2, MS3, MS4) gesendet werden, wobei die Parkdaten zumindest einen Parkflächencode enthalten, **dadurch gekennzeichnet, dass** das System ferner umfasst:
eine Positionierungseinrichtung zum Erzeugen von Positionsdaten, welche die Position des Terminals (MS, MS2, MS3, MS4) beschreibt,
eine Speichereinrichtung (2, 2', 2"', 2""), in welcher Daten, welche die Position der von dem Parkgebührensystem abgedeckten Parkflächen (A1 bis A11) und Flächencodes der Parkflächen beschreiben, gespeichert sind, und aus welchen ein oder mehrere Parkflächencodes basierend auf den Positionsdaten abrufbar sind,
eine Vergleichseinrichtung (3), welche den von dem Benutzer des Terminals (MS) beim Senden der Parkdaten angegebenen Flächencode mit dem aus der Speichereinrichtung (2) abgerufenen Flächencode auf der Basis der Positionsdaten vergleicht, und
wobei das Parkgebührensystem auf die Vergleichseinrichtung (3) reagiert, um dem Benutzer das Parken unter Verwendung eines Tarifs zu berechnen, welcher dem von diesem angegebenen Flächencode entspricht, wenn die Vergleichseinrichtung (3) angibt, dass der von dem Benutzer angegebene Flächencode dem auf der Basis der Positionsdaten aufgefundenen Flächencode entspricht.

5. Parkgebührensystem nach Anspruch 4, **dadurch gekennzeichnet, dass**
die Daten, welche die Position der Parkflächen beschreiben, Daten zum Erzeugen einer Karte (8) beinhalten, welche die von diesen abgedeckte geographische Fläche beschreiben,
das Parkgebührensystem eine Einrichtung (6') aufweist, um basierend auf den die Position des Terminals beschreibenden Positionsdaten Daten aus der Speichereinrichtung (2''') abzurufen und an das Terminal (MS3) zu senden, welche das Terminal zum Erzeugen der Karte (8) über ein Benutzerinterface (7) verwendet, wobei die Karte zumindest die Fläche abdeckt, in welcher sich das Terminal (MS4) basierend auf den die Position beschreibenden Positionsdaten befindet, und
das Terminal (MS3) Einrichtungen zum Übertragen der von dem Benutzer über das Benutzerinterface (7) auf der Karte (8) angegebenen Position an das Parkgebührensystem, welches basierend auf dieser Position den Flächencode aus der Speichereinrichtung (2"') abruft, welcher der der Position entspricht, und dem Benutzer das Parken unter Verwendung eines Tarifs berechnet, welcher dem aus der Speichereinrichtung abgerufenen Flächencode entspricht.

6. Parkgebührensystem nach Anspruch 4, **dadurch gekennzeichnet, dass**
die Informationen, welche die Position der Parkflächen beschreiben, Daten zum Erzeugen einer Karte umfassen, welche die von diesen abgedeckte geographische Fläche beschreiben,
das Parkgebührensystem eine Einrichtung (6') aufweist, um basierend auf den die Position des Terminals (MS3) beschreibenden Positionsdaten Daten aus der Speichereinrichtung (2''') abzurufen und an das Terminal zu senden, welche das Terminal (MS3) zum Erzeugen der Karte (8) über ein Benutzerinterface (7) verwendet, wobei die Karte zumindest die Fläche abdeckt, in welcher sich das Terminal (MS4) basierend auf den die Position beschreibenden Positionsdaten befindet, und wobei die Karte die Flächencodes der Parkflächen angibt, und
das Terminal (MS3) Einrichtungen zum Empfangen und Senden des von dem Benutzer über das Benutzerinterface (7) eingegebenen Flächencodes an das Parkgebührensystem aufweist, welches dem Benutzer das Parken unter Verwendung eines dem Flächencode entsprechenden Tarifs berechnet.

7. Parkgebührensystem nach Anspruch 4, **dadurch gekennzeichnet, dass**
die Positionierungseinrichtung eine Parkbasisstation (9) umfasst, welche nahe der Parkfläche vorgesehen ist und zum Senden von ihre Position beschreibenden Informationen an das Terminal (MS4) ausgebildet ist,
das Terminal (MS4) ausgebildet ist, um die von der Parkbasisstation gesendeten, die Position beschreibenden Informationen zu empfangen und diese zusammen mit den Parkdaten an das Parkgebührensystem zu senden, welches die die Position beschreibenden Informationen verwendet, um den der Position entsprechenden Flächencode aus der Speichereinrichtung (2"") abzurufen.

8. Netzwerkelement, **dadurch gekennzeichnet, dass** das Netzwerkelement (1, 6, 1") eine Speichereinrichtung (2, 2") umfasst, in welcher Informationen, welche die Position von Parkflächen (A1 bis A11), die von einem Parkgebührensystem abgedeckt werden, und Flächencodes der Parkflächen gespeichert sind, und aus welcher ein oder mehrere Parkflächencodes basierend auf den Positionsdaten abrufbar sind.

## Revendications

1. Procédé de traitement de données de stationnement dans un système de stationnement payant, dans lequel :
la zone géographique couverte par le système est divisée en zones de stationnement,
des codes de zones sont définis pour les zones de stationnement, et
des données de stationnement sont reçues par un utilisateur du système de stationnement payant par l'intermédiaire d'un système mobile, lesdites données de stationnement comprenant au moins un code de zone indiqué par l'utilisateur, **caractérisé par** :
la détection de la localisation d'un terminal utilisé pour transmettre les données de stationnement,
la récupération d'un ou plusieurs codes de zones de stationnement basés sur la localisation du terminal, à partir de moyens à mémoire,
la comparaison du code de zone récupéré avec le code de zone indiqué par l'utilisateur, et
la sélection d'un tarif correspondant au code de zone indiqué par l'utilisateur pour générer des données de facturation si le code de zone indiqué par l'utilisateur correspond au code de zone récupéré, ou l'envoi d'informations au terminal d'utilisateur relatives à un code de zone défectueux indiqué par l'utilisateur si le code de zone indiqué par l'utilisateur ne correspond pas au code de zone récupéré.

2. Procédé selon la revendication 1, **caractérisé en ce que**, dans le procédé, l'utilisateur indique le code de zone en appelant un numéro de téléphone désigné en liaison avec la zone de stationnement, le code de zone étant inclus dans le numéro, de telle sorte que le numéro de téléphone choisi par l'utilisateur indique le code de zone.

3. Procédé selon la revendication 1, **caractérisé en ce que**, dans le procédé, l'utilisateur indique le code de zone en indiquant sa localisation par une application cartographique affichée sur une interface utilisateur graphique sur le terminal, de telle sorte que le code de zone correspondant à la localisation indiquée est transféré au système de stationnement payant.

4. Système de stationnement payant, la zone géographique couverte par le système étant divisée en zones de stationnement (A1 à A11), et des codes de zones (A1 à A11) étant définis pour les zones de stationnement, le système comprenant un élément réseau (1, 1', 1''') pour recevoir des données de stationnement envoyées par un utilisateur par l'intermédiaire d'un terminal (MS, MS2, MS3, MS4), lesdites données de stationnement comprenant au moins un code de zone de stationnement, **caractérisé en ce que** le système comprend de plus :
des moyens de positionnement pour générer des données de localisation décrivant la localisation du terminal (MS, MS2, MS3, MS4),
des moyens à mémoire (2, 2', 2"', 2"") dans lesquels sont stockées les données décrivant la localisation des zones de stationnement (A1 à A11) couvertes par le système de stationnement payant et les codes de zones des zones de stationnement, et à partir desquels un ou plusieurs codes de zones de stationnement sont récupérables sur la base des données de localisation,
des moyens de comparaison (3) agencés pour comparer le code de zone indiqué par l'utilisateur du terminal (MS) lors de l'envoi des données de stationnement avec le code de zone récupéré par les moyens à mémoire (2) sur la base des données de localisation, et
ledit système de stationnement payant agit en réponse aux moyens de comparaison (3) pour facturer l'utilisateur pour le stationnement en utilisant un tarif correspondant au code de zone indiqué par cet utilisateur si les moyens de comparaison (3) indiquent que le code de zone indiqué par l'utilisateur correspond au code de zone récupéré sur la base des données de localisation.

5. Système de stationnement payant selon la revendication 4, **caractérisé en ce que**
les données décrivant la localisation des zones de stationnement incluent des données pour la génération d'une carte (8) décrivant la zone géographique couverte par celles-ci,
le système de stationnement payant comprend des moyens (6') pour récupérer des données à partir des moyens à mémoire (2"') et pour envoyer ces données au terminal (MS3), sur la base des données de localisation décrivant la localisation du terminal, ces données étant utilisées par le terminal pour la génération de la carte (8) par l'intermédiaire d'une interface utilisateur (7), cette carte couvrant au moins la zone dans laquelle le terminal (MS4) est localisé, sur la base desdites données de localisation décrivant la localisation, et
le terminal (MS3) comprend des moyens pour transférer la localisation, indiquée par l'utilisateur par l'intermédiaire de l'interface utilisateur (7) sur la carte, au système de stationnement payant, lequel, sur la base de ladite localisation, récupère le code de zone correspondant à la localisation des moyens à mémoire (2"') et facture l'utilisateur pour le stationnement en utilisant un tarif correspondant au code de zone récupéré à partir des moyens à mémoire.

6. Système de stationnement payant selon la revendication 4, **caractérisé en ce que**
les informations décrivant la localisation des zones de stationnement incluent des données pour la génération d'une carte décrivant la zone géographique couverte par celles-ci,
le système de stationnement payant comprend des moyens (6') pour récupérer des données à partir des moyens à mémoire (2"') et envoyer ces données au terminal, sur la base des données de localisation décrivant la localisation du terminal (MS3), ces données étant utilisées par le terminal (MS3) pour la génération de la carte par l'intermédiaire d'une interface utilisateur (7), cette carte couvrant au moins la zone dans laquelle le terminal (MS4) est localisé, sur la base desdites données de localisation décrivant la localisation, et laquelle carte indique les codes de zones des zones de stationnement, et
le terminal (MS3) comprend des moyens pour recevoir et envoyer le code de zone, saisi par l'utilisateur par l'intermédiaire de l'interface utilisateur (7), au système de stationnement payant, qui facture l'utilisateur pour le stationnement en utilisant un tarif correspondant au code de zone.

7. Système de stationnement payant selon la revendication 4, **caractérisé en ce que**
les moyens de positionnement comprennent une station de stationnement principale (9) agencée à proximité de la zone de stationnement et agencée pour envoyer des informations décrivant sa localisation au terminal (MS4),
le terminal (MS4) est agencé pour recevoir les informations décrivant la localisation envoyées par la station de stationnement principale et pour les envoyer, avec les données de stationnement, au système de stationnement payant, qui utilise les informations décrivant la localisation pour récupérer le code de zone correspondant à la localisation des moyens à mémoire (2"').

8. Élément réseau, **caractérisé en ce que** ce ledit élément réseau (1, 6, 1 ") comprend des moyens à mémoire (2, 2") dans lesquels sont stockées des informations décrivant la localisation des zones de stationnement (A1 à A11) couvertes par un système de stationnement payant et des codes de zones de zones de stationnement, et à partir duquel un ou plusieurs codes de zones de stationnement sont récupérables sur la base des données de localisation.
